# EUROPÄISCHE PATENTSCHRIFT

(11) **EP 2 394 825 B1**
(45) Veröffentlichungstag und Bekanntmachung des Hinweises auf die Patenterteilung: **19.12.2012**
(21) Anmeldenummer: 11162160.3
(22) Anmeldetag: 13.04.2011
(51) Int. Cl.: B60C 15/00, B60C 15/05

(54) **Fahrzeugreifen mit einem Laufstreifen, einem Gürtel, Seitenwänden, zwei Reifenwülsten mit Wulstkernen und mit mindestens einer Einlage mit einzelnen Festigkeitsträgern**
Automobile tyre with a tread strip, tyre belt, sidewalls, two tyre beads with bead cores and with a minimum of one carcass ply with single rigidity supports
Pneu de véhicule doté d'une bande de roulement, d'une ceinture, de parois latérales, de deux talons de pneu dotés de tringles de talon et d'au moins une carcasse dotée de supports de résistance individuels

(30) Priorität: 08.06.2010 DE 102010017271
(43) Veröffentlichungstag der Anmeldung: 14.12.2011
(73) Patentinhaber: Continental Reifen Deutschland GmbH, 30165 Hannover (DE)
(72) Erfinder: Thomforde, Claudia, 38542, Leiferde (DE); Elsen, Patrick, 5312, Contern (LU)
(74) Vertreter: Finger, Karsten

(56) Entgegenhaltungen:
- EP-A1- 0 467 277
- GB-A- 2 336 344
- JP-A- 8 040 026
- JP-A- 58 105 806

## Beschreibung

Die Erfindung betrifft einen Fahrzeugreifen mit einem Laufstreifen, einem Gürtel, Seitenwänden, zwei Reifenwülsten mit Wulstkernen und mit mindestens einer Einlage mit einzelnen Festigkeitsträgern.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen. Der Lagenumschlag im Reifenwulst bei konventionellen Fahrzeugreifen besitzt den Nachteil, dass die Kraft - und Spannungsverteilung im Reifenwulst u. U. nicht optimal ist. Eine ungünstige Kraft bzw. Spannungsverteilung im Reifenwulst wirkt sich nachteilig auf die Dauerhaltbarkeit des Reifenwulstes aus.

Die EP 0 467 277 A1, GB 2 336 344 A, JP 8 040026 A und JP 58 105806 A offenbaren bekannte Reifenwulstkonstruktione gemäß dem Oberbegriff von Anspruch 1.

Der Erfindung liegt die Aufgabe zugrunde, einen Fahrzeugreifen bereitzustellen, bei dem die Wulstkonstruktion im Hinblick auf die auftretenden Spannungszustände optimiert ist.

Gelöst wird die Aufgabe gemäß Anspruch 1.

Ein Vorteil der Erfindung ist insbesondere darin zu sehen, dass durch die erfindungsgemäße Wulstkonstruktion eine optimale Spannungsverteilung im Reifenwulst erreicht wird. Die in der Einlage des Fahrzeugreifens wirkenden Kräfte werden gleichmäßig auf den Wulstkern verteilt. Das Verstärkungsmittel am Lagenende sorgt für eine sichere Verankerung der Einlage im Reifenwulst. Dadurch wird ein selbständiges Herausziehen der Einlage im Reifenwulst verhindert. Außerdem werden die Festigkeitsträger, die in der Einlage angeordnet sind, ebenfalls fest im Reifenwulst verankert. Eine feste Verankerung der Festigkeitsträger ist insbesondere beim Bombieren der Karkasse oder beim Einformen des Reifenrohlings in die Vulkanisationspresse notwendig. Außerdem reduziert man die Wulstbreite um ein erhebliches Maß und schafft dadurch Platz für zusätzliche Wulstbauteile, beispielsweise Wulstverstärkerstreifen, die die Fahreigenschaften des Fahrzeugreifens verbessern. Ferner wird erfindungsgemäß die Wulsthaltbarkeit des Reifenwulstes erhöht, da eine geringere mechanische Dauerbelstung am Reifenwulst wirkt.

In einer vorteilhaften Weiterbildung der Erfindung ist vorgesehen, dass das Einlagenende mit dem Verstärkungsmittel eine Verdickung zur Verankerung der Festigkeitsträger der Einlage im Reifenwulst bildet.

Auf diese Weise wird das Einlagenende mit einer hohen Festigkeit im Reifenwulst verankert. Das Verstärkungsmittel klemmt das Einlagenende fest am Wulstkern bzw. Reifenkern ein.

In einer weiteren vorteilhaften Weiterbildung der Erfindung ist vorgesehen, dass die Verdickung zwischen dem Wulstkern und der Außenseite im Endbereich der Einlage eingeklemmt ist.

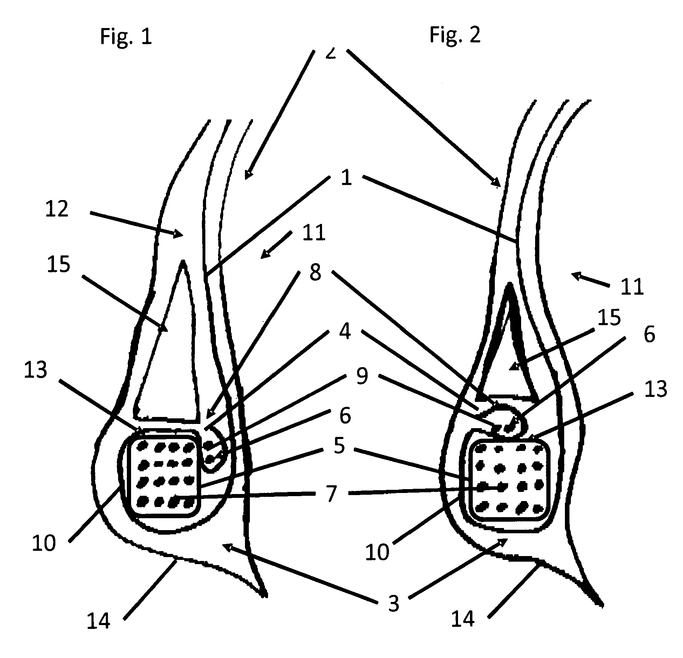

Ein entsprechendes Ausführungsbeispiel ist in der Figur 1 gezeigt. Durch die entsprechende Einklemmung wird die Verankerung des Einlagenendes erheblich verstärkt. Außerdem wird dadurch eine optimale Spannungsverteilung im Reifenwulst erreicht.

In einer weiteren vorteilhaften Weiterbildung der Erfindung ist vorgesehen, dass die Verdickung auf der Oberseite des Wulstkernes eingeklemmt ist, wobei das Verstärkungsmittel das Einlagenende mit einer hohen Festigkeit gegen die obere äußere Kante des Wulstkernes andrückt.

Ein entsprechendes Ausführungsbeispiel ist in der Figur 2 gezeigt. Durch die entsprechende Einklemmung wird die Verankerung des Einlagenendes erheblich verstärkt. Außerdem wird dadurch eine optimale Spannungsverteilung im Reifenwulst erreicht.

In einer weiteren vorteilhaften Weiterbildung der Erfindung ist vorgesehen, dass das Verstärkungsmittel aus Stahlcord, Textil oder einem Elastomer besteht.

Diese Materialien besitzen optimale Festigkeitseigenschaften.

In einer weiteren vorteilhaften Weiterbildung der Erfindung ist vorgesehen, dass das Verstärkungsmittel aus einem fadenförmigen Verbundmaterial besteht, wobei dieses Verbundmaterial eine Kombination von Stahlcord, Textil oder einem Elastomer umfasst. Mit einem entsprechenden Verbundmaterial lassen sich die Festigkeitseigenschaften des Verstärkungsmittels gezielt beeinflussen. Dadurch wird das Einlagenende mit einer hohen Festigkeit im Reifenwulst verankert.

Es ist vorgesehen, dass das Verstärkungsmittel in Umfangsrichtung des Reifenwulstes partiell Unterbrechungen aufweist.

Partielle Unterbrechungen im Verstärkungsmittel können insbesondere bei der Herstellung der Reifenkarkasse vorteilhaft sein, insb. beim Anordnen der Langenenden zwischen beiden Wulstkernen.

In einer weiteren vorteilhaften Weiterbildung der Erfindung ist vorgesehen, dass der Fahrzeugreifen ein Fahrzeugreifen für Personenkraftwagen ist.

Anhand mehrerer Ausführungsbeispiele soll die Erfindung näher erläutert werden. Es zeigen:
- Fig. 1:: ein Ausführungsbeispiel für einen Reifenwulst,
- Fig. 2:: ein weiteres Ausführungsbeispiel.

Die Figur 1 zeigt ein erstes Ausführungsbeispiel.

Der erfindungsgemäße Reifenwulst 2 ist lediglich schematisch dargestellt. Es ist ein Radialquerschnitt durch den erfindungsgemäßen Reifenwulst 1 dargestellt, wobei die Unterseite 14 der Abschnitt des Reifenwulstes ist, welcher im Normalfall auf der Fahrzeugfelge anliegt. Die Reifeninnenseite 11 liegt auf der rechten Seite des Reifenwulstes 2. Im Wulstkern 5 sind einzelne Drähte 7 angeordnet, die in Umfangsrichtung des Reifenwulstes 2 ausgerichtet sind und den Reifenwulst insgesamt ringförmig umschließen. Die Einlage 1 wird ebenfalls als Karkasslage bezeichnet.

Die Einlage 1 erstreckt sich von der Reifenseitenwand bis zum Wulstkern 5 in der dargestellten Weise, wobei die Einlage 1 von der Reifeninnenseite 11 um die Unterseite des Wulstkernes 5 vollständig herumgeschlagen ist. Das Einlagenende 4 endet zwischen der Außenseite 12 im Endbereich 3 der Einlage 1. Das Einlagenende 4 ist dabei in ein Verstärkungsmittel 6 und 9 eingewickelt, wobei diese Verdickung 8 wiederum zwischen dem Wulstkern 5 und der Außenseite 12 im Endbereich der Einlage 1 eingeklemmt ist. Auf diese Weise wird das Einlagenende 4 mit einer hohen Festigkeit im Reifenwulst 2 verankert. Diese Verankerung wird auch dadurch unterstützt, dass der Lagenumschlag 10 der Einlage 1 an den vier Kanten des Wulstkernes 5 über entsprechende Reibungskräfte gehalten wird. Bei diesem Ausführungsbeispiel wird die Verdickung 8 durch zwei drahtförmige Verstärkungsmittel 6 und 9 gebildet, die den Reifenwulst in Umfangsrichtung ringförmig umschließen. Das Verstärkungsmittel 9 besteht vorzugsweise aus einem Stahlkorddraht.

Durch die dargestellte Art der Einklemmung des Einlagenendes 3 wird gewährleistet, dass die Festigkeitsträger in der Einlage 1 ebenfalls hochfest im Reifenwulst 2 verankert werden. Die Verdickung 8 am Einlagenende 3 sorgt dafür, dass das Einlagenende 3 nicht aus dem Reifenwulst herausgezogen werden kann. Das Gleiche gilt für die Festigkeitsträger, die in radialer Richtung in der Einlage 1 angeordnet sind.

Die Figur 2 zeigt ein weiteres Ausführungsbeispiel eines erfindungsgemäßen Reifenwulstes 2. Der Reifenwulst 2 ist wiederum lediglich schematisch dargestellt. Der wesentliche Unterschied zu dem Ausführungsbeispiel in der Figur 1 besteht darin, dass das Einlagenende 4 mit der Verdickung 8 auf der Oberseite 13 des Wulstkernes 5 endet. Die Verdickung 8 wird durch die zwei dargestellten Verstärkungsmittel 9 gebildet, die in das Einlagenende 4 eingewickelt sind. Die Verdickung 8 klemmt das Einlagenende 4 mit einer hohen Festigkeit gegen die obere Kante des Wulstkernes 5 an, wodurch das Einlagenende 4 fest am Wulstkern 5 verankert wird. Diese Verankerung wird ebenfalls dadurch unterstützt, dass der Lagenumschlag 10 der Einlage 1 an den jeweiligen Kanten des Wulstkernes 5 gehalten wird. Bei diesem Ausführungsbeispiel sind in der Verdickung 8 zwei Verstärkungsmittel 9 angeordnet.

Das Verstärkungsmittel 9 ist beispielsweise ein Stahlcord, der in Umfangsrichtung des Reifenwulstes ausgerichtet ist und den Reifenwulst ringförmig umschließt. Dieses Verstärkungsmittel 9 könnte über den Umfang gesehen partiell Unterbrechungen aufweisen. Durch diese Unterbrechungen lässt sich das Verstärkungsmittel einfacher im Reifenwulst applizieren. Aufgrund einer besseren Darstellbarkeit ist der Wulstkern 5 vom Einlagenende 3 beabstandet dargestellt. Im realen Reifenwulst würde der Wulstkern 5 direkt am Einlagenende anliegen und dadurch das Einlagenende fest im Reifenwulst 2 verankern.

Der Lagenumschlag 10 verläuft jeweils unterhalb von dem Apex 15 und oberhalb von dem Wulstkern 5.

### Bezugszeichenliste

### (ist Teil der Beschreibung)

- 1: Einlage
- 2: Reifenwulst
- 3: bzw. Endbereich der Einlage
- 4: Einlagenende
- 5: Wulstkern
- 6: Verstärkungsmittel
- 7: Drähte im Wulstkerne
- 8: Verdickung
- 9: Verstärkungsmittel: Einzelfäden oder Einzelcorde
- 10: Lagenumschlag
- 11: Reifeninnenseite
- 12: Außenseite im Endbereich der Einlage
- 13: Oberseite des Wulstkernes
- 14: Unterseite des Reifenwulstes
- 15: Apex oder Kernreiter

## Patentansprüche

1. Fahrzeugreifen mit einem Laufstreifen, einem Gürtel, Seitenwänden, zwei Reifenwülsten (2) mit Wulstkernen (5) und mit mindestens einer Einlage (1) mit einzelnen Festigkeitsträgern,
wobei die Einlage (1) sich über den gesamten Reifenquerschnitt von dem ersten bis zum zweiten Reifenwulst (2) erstreckt und der Wulstkern (5) eine Vielzahl von Drähten (7) umfasst, wobei diese Drähte (7) in Umfangsrichtung des Fahrzeugreifens ausgerichtet sind und sich ringförmig über den gesamten Umfang des Reifenwulstes (2) erstrecken,
wobei der Endbereich (3) der Einlage (1) von der Reifeninnenseite (11) um die Unterseite des Wulstkernes (5) herumgeschlagen ist,
der Endbereich (3) der Einlage (1) im Reifenwulst (2) im Wesentlichen direkt am Wulstkern (5) endet, wobei der Endbereich (3) der Einlage (1) an mindestens drei Kanten des Wulstkernes (5) über Reibungskräfte gehalten wird und das Einlagenende (4) um zusätzliche Verstärkungsmittel (6, 9) herum gewickelt ist, wodurch die einzelnen Festigkeitsträger der Einlage (1) fest im Reifenwulst (2) verankert werden
**dadurch gekennzeichnet, dass**
das Verstärkungsmittel (6, 9) in Umfangsrichtung des Reifenwulstes (2) partiell Unterbrechungen aufweist.

2. Fahrzeugreifen nach Anspruch 1,
**dadurch gekennzeichnet, dass**
das Einlagenende (4) mit dem Verstärkungsmittel (6, 9) eine Verdickung (8) zur Verankerung der Festigkeitsträger der Einlage (1) im Reifenwulst bildet.

3. Fahrzeugreifen nach einem der vorhergehenden Ansprüche,
**dadurch gekennzeichnet, dass**
die Verdickung (8) zwischen dem Wulstkern (5) und der Außenseite (12) im Endbereich der Einlage (1) eingeklemmt ist.

4. Fahrzeugreifen nach einem der vorhergehenden Ansprüche,
**dadurch gekennzeichnet, dass**
die Verdickung (8) auf der Oberseite (13) des Wulstkernes (5) eingeklemmt ist, wobei das Verstärkungsmittel (6, 9) das Einlagenende (3) mit einer hohen Festigkeit gegen die obere äußere Kante des Wulstkernes (5) andrückt.

5. Fahrzeugreifen nach einem der vorhergehenden Ansprüche,
**dadurch gekennzeichnet, dass**
das Verstärkungsmittel (6, 9) aus Stahlcord, Textil oder einem Elastomer besteht.

6. Fahrzeugreifen nach einem der vorhergehenden Ansprüche,
**dadurch gekennzeichnet, dass**
das Verstärkungsmittel (6, 9) aus einem fadenförmigen Verbundmaterial besteht, wobei dieses Verbundmaterial eine Kombination von Stahlcord, Textil oder einem Elastomer umfasst.

7. Fahrzeugreifen nach einem der vorhergehenden Ansprüche,
**dadurch gekennzeichnet, dass**
der Fahrzeugreifen ein Fahrzeugreifen für Personenkraftwagen ist.

## Claims

1. Vehicle tyre with a tread rubber, a breaker belt, sidewalls, two tyre beads (2) with bead cores (5) and with at least one insert (1) with individual reinforcing elements,
the insert (1) extending over the entire cross section of the tyre from the first to the second tyre bead (2) and the bead core (5) comprising a multiplicity of wires (7), these wires (7) being aligned in the circumferential direction of the vehicle tyre and extending annularly over the entire circumference of the tyre bead (2),
the end region (3) of the insert (1) being wrapped around the underside of the bead core (5) from the inner side (11) of the tyre,
the end region (3) of the insert (1) in the tyre bead (2) ending substantially directly at the bead core (5), the end region (3) of the insert (1) being held against at least three edges of the bead core (5) by means of frictional forces and the insert end (4) being wrapped around additional reinforcing means (6, 9), whereby the individual reinforcing elements of the insert (1) are firmly anchored in the tyre bead (2),
**characterized in that**
the reinforcing means (6, 9) partially has interruptions in the circumferential direction of the tyre bead (2).

2. Vehicle tyre according to Claim 1,
**characterized in that**
the insert end (4) forms with the reinforcing means (6, 9) a thickening (8) for the anchoring of the reinforcing elements of the insert (1) in the tyre bead.

3. Vehicle tyre according to one of the preceding claims,
**characterized in that**
the thickening (8) is clamped in between the bead core (5) and the outer side (12) in the end region of the insert (1).

4. Vehicle tyre according to one of the preceding claims,
**characterized in that**
the thickening (8) is clamped in on the upper side (13) of the bead core (5), the reinforcing means (6, 9) pressing the insert end (3) with a high strength against the upper outer edge of the bead core (5).

5. Vehicle tyre according to one of the preceding claims,
**characterized in that**
the reinforcing means (6, 9) consists of steel cord, textile or an elastomer.

6. Vehicle tyre according to one of the preceding claims,
**characterized in that**
the reinforcing means (6, 9) consists of a filamentary composite material, this composite material comprising a combination of steel cord, textile or an elastomer.

7. Vehicle tyre according to one of the preceding claims,
**characterized in that**
the vehicle tyre is a vehicle tyre for passenger cars.

## Revendications

1. Pneu de véhicule comprenant une bande de roulement, une ceinture, des parois latérales, deux talons de pneu (2) avec des tringles (5) et au moins une carcasse (1) avec des renforts individuels,
la carcasse (1) s'étendant sur toute la section transversale du pneu depuis le premier talon de pneu jusqu'au deuxième talon de pneu (2), et la tringle (5) comprenant une pluralité de câbles (7), ces câbles (7) étant orientés dans la direction périphérique du pneu de véhicule et s'étendant sous forme annulaire sur toute la périphérie du talon de pneu (2),
la région d'extrémité (3) de la carcasse (1) étant guidée depuis le côté intérieur du pneu (11) autour du côté inférieur de la tringle (5),
la région d'extrémité (3) de la carcasse (1) dans le talon de pneu (2) se terminant sensiblement directement au niveau de la tringle (5), la région d'extrémité (3) de la carcasse (1) étant maintenue au niveau d'au moins trois bords de la tringle (5) par le biais de forces de friction et l'extrémité de la carcasse (4) étant enroulée autour de moyens de renforcement supplémentaires (6, 9), de sorte que les renforts individuels de la carcasse (1) soient ancrés fermement dans le talon de pneu (2),
**caractérisé en ce que**
le moyen de renforcement (6, 9) présente des interruptions partielles dans la direction périphérique du talon de pneu (2).

2. Pneu de véhicule selon la revendication 1,
**caractérisé en ce que**
l'extrémité de la carcasse (4) forme avec le moyen de renforcement (6, 9) un épaississement (8) pour l'ancrage des renforts de la carcasse (1) dans le talon de pneu.

3. Pneu de véhicule selon l'une quelconque des revendications précédentes,
**caractérisé en ce que**
l'épaississement (8) est serré entre la tringle (5) et le côté extérieur (12) dans la région d'extrémité de la carcasse (1).

4. Pneu de véhicule selon l'une quelconque des revendications précédentes,
**caractérisé en ce que**
l'épaississement (8) est serré sur le côté supérieur (13) de la tringle (5), le moyen de renforcement (6, 9) pressant l'extrémité de la carcasse (3) avec une grande solidité contre le bord supérieur extérieur de la tringle (5).

5. Pneu de véhicule selon l'une quelconque des revendications précédentes,
**caractérisé en ce que**
le moyen de renforcement (6, 9) se compose de câble d'acier, de textile ou d'un élastomère.

6. Pneu de véhicule selon l'une quelconque des revendications précédentes,
**caractérisé en ce que**
le moyen de renforcement (6, 9) se compose d'un matériau composite en forme de fil, ce matériau composite comprenant une combinaison de câble d'acier, de textile ou d'un élastomère.

7. Pneu de véhicule selon l'une quelconque des revendications précédentes,
**caractérisé en ce que**
le pneu de véhicule est un pneu pour véhicules de transport de personnes.
